# EUROPEAN PATENT APPLICATION

(11) **EP 2 194 705 A2**
(43) Date of publication of application: **09.06.2010**
(21) Application number: 09252657.3
(22) Date of filing: 20.11.2009
(51) Int. Cl.: H04N 5/44, H04N 5/52

(54) **Receiving device, reception method, and program**

(30) Priority: 05.12.2008 JP 2008310529
(71) Applicant: Sony Corporation, Tokyo 108-0075 (JP)
(72) Inventor: Koike, Seiichi, Tokyo 108-0075 (JP)
(74) Representative: Turner, James Arthur

(57) **Abstract**

A receiving apparatus includes a plurality of receivers, each including a variable gain section configured to amplify or attenuate an input signal input thereto with a gain corresponding to an AGC (Automatic Gain Control) signal, and a generator configured to generate an AGC signal in each case when an input signal input to the respective receivers is greater than a predetermined signal level, the AGC signal reducing the gain of the variable gain section in response to a signal level of the input signal. The variable gain section in each of the plurality of receivers amplifies or attenuates the input signal with a gain corresponding to the AGC signal generated by the generator, when the input signal input to the receiver is greater than the predetermined signal level.

## Description

The invention relates to a receiving apparatus, a reception method, and a program.

Usually a television receiver includes a tuner that receives a television signal transmitted from a broadcasting station selected from among a plurality of broadcasting stations (channels).

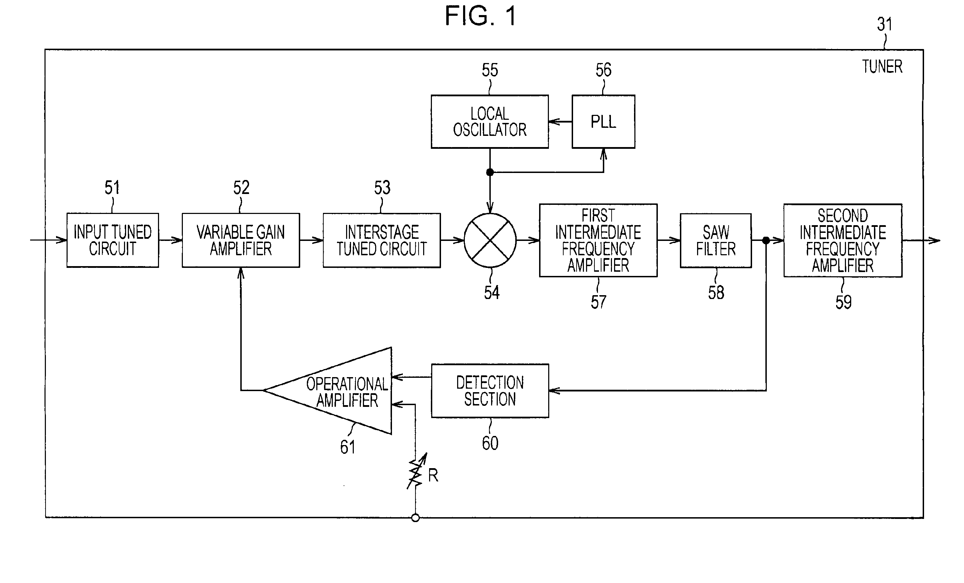

Fig. 1 of the accompanying drawings shows a configuration example of a tuner included in a television receiver of the related art.

A tuner 31 shown in Fig. 1 receives an analog television signal and a digital television signal and supplies them to a demodulation section not shown in Fig. 1. In addition, a television signal to be simply called so hereinafter includes the analog television signal and the digital television signal.

The tuner 31 shown in Fig. 1 includes an input tuning circuit 51, a variable-gain amplifier 52, an interstage tuning circuit 53, a mixer 54, a local oscillator 55, a PLL (Phase Locked Loop) circuit 56, a first intermediate frequency amplifier 57, a SAW (Surface Acoustic Wave) filter 58, a second intermediate frequency amplifier 59, a detection section 60, and an operational amplifier 61.

The input tuning circuit 51 controls a tuning frequency so as to tune in to a frequency of a television signal (hereinafter called a desired wave) from a channel to be received. The input tuning circuit 51 includes a single tuning circuit whose tuning characteristic is relatively moderate. The variable-gain amplifier 52 amplifies a television signal supplied from the input tuning circuit 51 with a gain corresponding to an AGC (Automatic Gain Control) signal supplied from the operational amplifier 61. In the same way as the input tuning circuit 51, the interstage tuning circuit 53 controls a tuning frequency so as to tune in to a frequency of a television signal (a desired wave) from a channel to be received. The interstage tuning circuit 53 includes a double tuning circuit. The tuning characteristic of the double tuning circuit is higher in selectivity than that of the input tuning circuit 51 and has a good characteristic of excluding an interfering wave (a television signal from a channel other than a channel to be received). The mixer 54 heterodynes a received television signal by multiplying a television signal supplied from the interstage tuning circuit 53 by a local oscillator signal, having a predetermined frequency, supplied from the local oscillator 55 and generates an intermediate frequency signal (IF signal). The local oscillator 55 is frequency-controlled by a variable-capacitance control voltage output from the PLL circuit 56 and supplies a local oscillator signal having a predetermined frequency to the mixer 54.

In the above-mentioned configuration, the received television signal is frequency-converted to an IF signal. Usually, since a tuning circuit excludes (attenuates) an interfering wave, only the desired wave is converted to the IF signal within a predetermined intermediate-frequency band. Since the interfering wave is attenuated by the tuning characteristics of the input tuning circuit 51 and the interstage tuning circuit 53, a signal level of the frequency-converted interfering wave (an IF signal based on the interfering wave) is smaller than that of the IF signal based on the desired wave.

The first intermediate frequency amplifier 57 amplifies the IF signal supplied from the mixer 54 at a predetermined ratio. The SAW filter 58 allows only a signal to pass therethrough, the signal existing within an intermediate-frequency band in the IF signal supplied from the first intermediate frequency amplifier 57, and attenuates a signal out of the intermediate-frequency band. The second intermediate frequency amplifier 59 amplifies the IF signal supplied from the SAW filter 58 at a predetermined ratio and supplied the amplified IF signal to the demodulation section not shown in Fig. 1.

In the above-mentioned configuration, in relation to the IF signal supplied from the SAW filter 58, the signal level of the IF signal based on the interfering wave is smaller than that of the IF signal based on the desired wave.

Regarding the IF signal output from the SAW filter 58, the detection section 60 detects only the IF signal based on the desired wave other than the IF signal based on the interfering wave and supplies the detection result as an AGC voltage to the variable-gain amplifier 52 through the operational amplifier 61. The operational amplifier 61 converts a signal level of the AGC voltage supplied from the detection section 60 to a predetermined signal level and supplies the predetermined signal level to the variable-gain amplifier 52.

In the above-mentioned configuration, since a gain of the received television signal is controlled in the variable-gain amplifier 52, the IF signal corresponding to a television signal (desired wave) from a channel to be received is output at a nearly constant level.

By the way, recently a tuner called a silicon tuner has been developed with the development of semiconductor technology. Different from the above-mentioned tuner of the related art, the silicon tuner is a tuner of a non-tuning type with no tuning circuit. Since the silicon tuner is equipped with no tuning circuit, a tuner function is easy to integrate in an IC (Integrated Circuit). Furthermore, the number of external parts can be reduced and adjustment may be unnecessary. In addition, in the silicon tuner, an intermediate frequency can be lowered from tens of megahertz in the related art to several megahertz and loads of signal processing in subsequent stages can be reduced (see, for example, nonpatent literature 1: "CXA3746ER a silicon tuner IC with high receiver sensitivity and high interference-resistant capability", searched for online on September 19, 2008 (URL: http://www.sony.co.jp/Products/SC-HP/cx_pal/vo176/pdf/cxa3746er.pdf)).

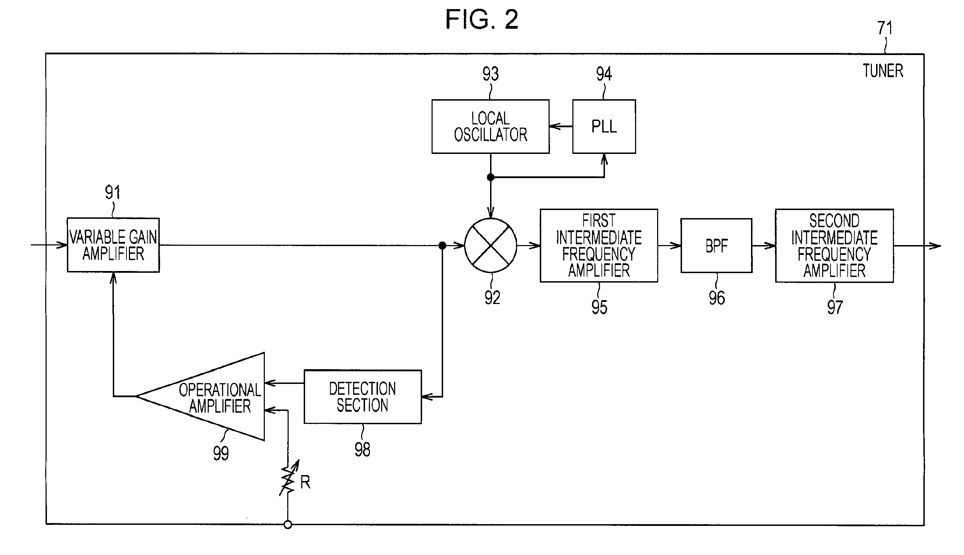

Fig. 2 of the accompanying drawings shows a configuration example of a silicon tuner of a low-intermediate frequency type.

A tuner 71 shown in Fig. 2 includes a variable gain amplifier 91, a mixer 92, a local oscillator 93, a PLL circuit 94, a first intermediate frequency amplifier 95, a BPF (Band Pass Filter) 96, a second intermediate frequency amplifier 97, a detection section 98, and an operational amplifier 99. In addition, in terms of functions, the variable gain amplifier 91, the mixer 92, the local oscillator 93, the PLL circuit 94, the first intermediate frequency amplifier 95, the second intermediate frequency amplifier 97, and the operational amplifier 99 correspond to the variable-gain amplifier 52, the mixer 54, the local oscillator 55, the PLL (Phase Locked Loop) circuit 56, the first intermediate frequency amplifier 57, the second intermediate frequency amplifier 59, and the operational amplifier 61 included in the tuner 31 shown in Fig. 1, respectively. Therefore, descriptions thereof will be omitted.

The BPF 96, whose passband corresponds to an intermediate frequency band, allows an IF signal supplied from the first intermediate frequency amplifier 95 to pass therethrough. The detection section 98 detects a television signal output from the variable gain amplifier 91 and supplies the detection result as an AGC voltage to the variable-gain amplifier 91 through the operational amplifier 99.

Since, different from the tuner 31 shown in Fig. 1, the tuner 71 is equipped with no tuning circuit, an unnecessary signal component (an interfering wave) is difficult to exclude (attenuate). Therefore, the number of signals input to the variable gain amplifier 91 and the mixer 92 increases and the signal level becomes large. Accordingly, distortions in circuits in subsequent stages arise easily.

Therefore, in the tuner 71 shown in Fig. 2, when an entire television signal (desired wave and interfering wave) is supplied from the variable gain amplifier 91 to the detection section 98, the detection section 98 detects the entire television signal (desired wave and interfering wave) and outputs the detection result as an AGC voltage. The AGC voltage at this time reflects a signal level corresponding to the entire television signal including the desired wave and the interfering wave. Actually, however, it is difficult for the detection section 98 to detect a television signal in all frequency bands. Therefore, only a television signal in a predetermined frequency band (detectable frequency band: about ±100MHz) is detected. This is because the detectable bandwidth of the detection section 98 generating the AGC voltage is narrower than the receivable bandwidth of the tuner 71.

By the way, while a digital television signal is transmitted through a channel other than an existing channel used for an analog television signal, the signal level of the digital television signal can be from 35dB to 45dB smaller than that of the analog television signal.

In this condition, when a silicon tuner of the non-tuning type simultaneously receives the digital television signal as a desired wave and the analog television signal with a high signal level as an interfering wave, the gain of the variable gain amplifier 91 is controlled on the basis of an AGC voltage corresponding to the signal level of the interfering wave (analog television signal) if the interfering wave exists within a detectable frequency band. Therefore, a signal which has a signal level causing no distortion in the mixer 92 is supplied to the mixer 92.

On the other hand, if the analog television signal with a high signal level as an interfering wave exists outside the detectable frequency band, it is not detected that the interfering wave with a high signal level exists outside the detectable frequency band. Therefore, an AGC voltage corresponding to the digital television signal as a desired wave (corresponding to a low input-signal level) is output. As a result, the variable gain amplifier 91 supplies the analog television signal (interfering wave) to the mixer 92, the analog television signal (interfering wave) being maximally-amplified on the basis of an AGC voltage not adjusting to the signal level of the received analog television signal (interfering wave). Since the signal level of the analog television signal supplied from the variable gain amplifier 91 is too high, the mixer 92 raises an unnecessary distortion component within an intermediate frequency band. Therefore, the mixer 92 falls into an unreceivable state. In addition, in the variable gain amplifier 91, when an output signal is saturated by a high-amplitude signal, a so-called "gain-compression" phenomenon that an amplification degree apparently decreases in response to an increase in amplitude arises. As a result, the digital television signal to be received is not amplified fully.

Then, an AGC voltage corresponding to the signal level of the received television signal can be output from a stage in which the signal level is low. However, in this case, an S/N (Signal to Noise) ratio of a channel from which the television signal is to be received decreases.

In view of the above-mentioned circumstances, it is desirable to reduce distortion of an intermediate frequency signal in a silicon tuner of the non-tuning type.

Various respective aspects and features of the invention are defined in the appended claims. Combinations of features from the dependent claims may be combined with features of the independent claims as appropriate and not merely as explicitly set out in the claims.

Embodiments of the invention relate to a receiving apparatus, a reception method, and a program capable of reducing distortion of an intermediate frequency signal.

According to an embodiment of the invention, there is provided a receiving apparatus including:
a plurality of receiving means, each thereof including a variable gain section configured to amplify or attenuate an input signal input thereto with a gain corresponding to an AGC (Automatic Gain Control) signal; and
generating means for generating the AGC signal in each case when an input signal input to the respective receiving means is greater than a first predetermined signal level, the AGC signal reducing the gain of the variable gain section in response to a signal level of the input signal;
wherein the variable gain section in each of the plurality of receiving means amplifies or attenuates the input signal with a gain corresponding to the AGC signal generated by the generating means, when the input signal input to the receiving means is greater than the first predetermined signal level.

In the receiving apparatus, preferably each of the plurality of receiving means further includes a detection section for detecting the input signal and generating a detection signal corresponding to the signal level of the input signal;
the generating means generates the AGC signal when the detection signal generated in any of the plurality of receiving means is greater than a second predetermined signal level, the AGC signal reducing the gain of the variable gain section in response to a signal level of the detection signal; and
the variable gain section in each of the plurality of receiving means amplifies or attenuates the input signal with a gain corresponding to the AGC signal generated by the generating means, when the detection signal generated in the receiving means is greater than the second predetermined signal level.

In the receiving apparatus, preferably the generating means generates the AGC signal when the detection signal generated in any of the plurality of receiving means is greater than the second predetermined signal level, the AGC signal reducing the gain of the variable gain section in response to the signal level of the detection signal, and the generating means selects the AGC signal corresponding to the detection signal having the largest signal among the AGC signals; and
the variable gain section in each of the plurality of receiving means amplifies or attenuates the input signal with a gain corresponding to the AGC signal selected by the generating means.

In the receiving apparatus, preferably the detection section in each of the plurality of receiving means detects an input signal in a different frequency band.

In the receiving apparatus, preferably a desired signal as an input signal to be received and an interfering signal as an input signal not to be received are input to each of the plurality of receiving means;
the generating means generates the AGC signal when a signal level of the interfering signal is greater than a signal level of the desired signal, the AGC signal reducing the gain of the variable gain section in response to the signal level of the interfering signal; and
the variable gain section in each of the plurality of receiving means amplifies or attenuates the desired signal and the interfering signal with a gain corresponding to the AGC signal generated by the generating means, when the signal level of the interfering signal is greater than the signal level of the desired signal.

In the receiving apparatus, preferably each of the plurality of receiving means further includes an adjustment section configured to generate and adjust the AGC signal corresponding to the input signal in each case when an input signal input to the respective receiving means is smaller than the first predetermined signal level; and
the variable gain section in each of the plurality of receiving means amplifies or attenuates the input signal with a gain corresponding to the AGC signal adjusted by the adjustment section.

In the receiving apparatus, preferably each of the plurality of receiving means further includes a switch section configured to switch between acquisition of the AGC signal by the generating means and acquisition of the AGC signal by the adjustment section, the AGC signal being used in the variable gain section.

According to an embodiment of the invention, there is provided a reception method performed in a receiving apparatus, the receiving apparatus including:
a plurality of receiving means, each thereof including a variable gain section configured to amplify or attenuate an input signal input thereto with a gain corresponding to an AGC (Automatic Gain Control) signal; and
generating means configured to generate the AGC signal in each case when an input signal input to the respective receiving means is greater than a predetermined signal level, the AGC signal reducing the gain of the variable gain section in response to a signal level of the input signal, the reception method including the steps of:
   generating the AGC signal by the generating means when the input signal input to any of the plurality of receiving means is greater than the predetermined signal level, the AGC signal reducing the gain of the variable gain section in response to the signal level of the input signal; and
   amplifying or attenuating the input signal, by the variable gain section in each of the plurality of receiving means, with a gain corresponding to the AGC signal generated in the generating step, when the input signal input to the receiving means is greater than the predetermined signal level.

According to an embodiment of the invention, there is provided a recording medium storing a computer readable program configured to cause a receiving apparatus to execute processing, the receiving apparatus including:
a plurality of receiving means, each thereof including a variable gain section configured to amplify or attenuate an input signal input thereto with a gain corresponding to an AGC (Automatic Gain Control) signal; and
generating means configured to generate the AGC signal in each case when an input signal input to the respective receiving means is greater than a predetermined signal level, the AGC signal reducing the gain of the variable gain section in response to a signal level of the input signal, the computer readable program including the steps of:
   generating the AGC signal by the generating means when the input signal input to any of the plurality of receiving means is greater than the predetermined signal level, the AGC signal reducing the gain of the variable gain section in response to the signal level of the input signal; and
   amplifying or attenuating the input signal, by the variable gain section in each of the plurality of receiving means, with a gain corresponding to the AGC signal generated in the generating step, when the input signal input to the receiving means is greater than the predetermined signal level.

According to an embodiment of the invention, an AGC signal is generated when an input signal input to each of a plurality of receiving means is greater than a predetermined signal level, the AGC signal reducing a gain of a variable gain section in response to a signal level of the input signal; and
the input signal is amplified or attenuated with a gain corresponding to the generated AGC signal when one of the input signals input to the plurality of receiving means respectively is greater than the predetermined signal level.

Embodiments of the invention will now be described with reference to the accompanying drawings, throughout which like parts are referred to by like references, and in which:
Fig. 1 is a block diagram showing a configuration example of a tuner in a television receiver of the related art.
Fig. 2 is a block diagram showing another configuration example of a tuner in a television receiver of the related art.
Fig. 3 is a block diagram showing a configuration example of a television receiver as an embodiment of a receiving apparatus according to an embodiment of the present invention.
Fig. 4 is a block diagram showing a configuration example of a tuner in the television receiver.
Fig. 5 is a flowchart describing gain control processing in the tuner shown in Fig. 4.
Fig. 6 is a diagram showing a characteristic between an input signal level and a detection signal level in a detection section.
Fig. 7 is a diagram showing a characteristic between the detection signal level and an AGC voltage in an AGC voltage selection section.
Fig. 8 is a diagram showing a characteristic between the AGC voltage and a gain in a variable gain amplifier.
Fig. 9 is a diagram showing a characteristic between an input signal level and the gain.
Fig. 10 is a diagram describing a detectable frequency band of the detection section in the tuner.

Fig. 11 is a diagram describing a function of the tuner when a television signal including only a desired wave is received.

Fig. 12 is a diagram describing a case in which an interfering wave is included in a detectable frequency band of the tuner.

Fig. 13 is a diagram describing a function of the tuner when a television signal including the interfering wave is received.

Fig. 14 is a block diagram showing another configuration example of the tuner.

Fig. 15 is a flowchart describing gain control processing in the tuner shown in Fig. 14.

Fig. 16 is a block diagram showing a hardware configuration example of a computer.

Hereinafter, preferred embodiments of the present invention will be described with reference to figures. In addition, the preferred embodiments will be described in the sequence as below.
1. a first embodiment
2. a second embodiment

### 1. First Embodiment

### Configuration Example of Television Receiver

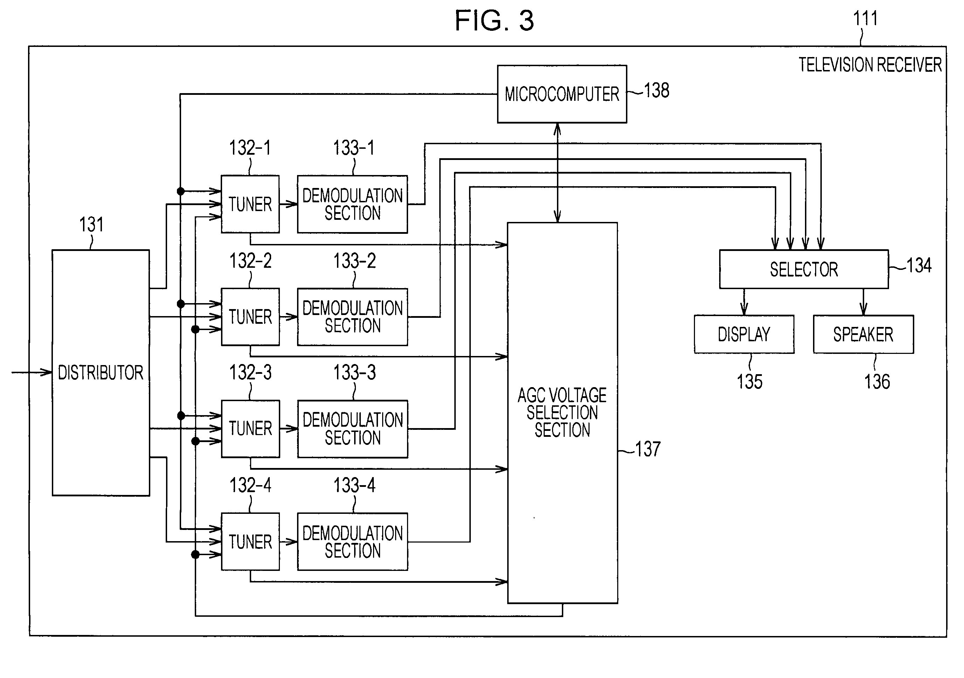

Fig. 3 shows a configuration example of a television receiver as an embodiment of a receiving apparatus according to an embodiment of the present invention.

A television receiver 111 shown in Fig. 3 includes a distributor 131, tuners 132-1 to 132-4, demodulation sections 133-1 to 133-4, a selector 134, a display 135, a speaker 136, an AGC-voltage selection section 137, and a microcomputer 138.

The distributor 131 equally distributes an analog television signal and a digital television signal (simply called a television signal, including both television signals) to each of the tuners 132-1 to 132-4, the analog television signal and the digital television signal being supplied from an antenna not shown in Fig. 3.

The tuners 132-1 to 132-4 each extract a television signal of a channel from the television signal distributed by the distributor 131, the channel being selected by operating an operation input section not shown in Fig. 3, and supply the television signal as an IF signal to the respective demodulation sections 133-1 to 133-4. In this case, it is assumed that channels (frequency bands) of the television signals extracted by the tuners 132-1 to 132-4 are different from one another.

In addition, each of the tuners 132-1 to 132-4 detects the distributed television signal and supplies a detection signal corresponding to the signal level of the television signal to the AGC voltage selection section 137. Furthermore, the tuners 132-1 to 132-4 amplify or attenuate the television signals on the basis of an AGC voltage and supply the television signals to the demodulation sections 133-1 to 133-4 respectively, the AGC voltage being used to control amplification gain or attenuation gain of the television signals.

In addition, each of the tuners 132-1 to 132-4 does not detect television signals in all frequency bands but a television signal in a predetermined frequency band (detectable frequency band: about ±100MHz).

The demodulation sections 133-1 to 133-4 demodulate IF signals supplied from the tuners 132-1 to 132-4 respectively and supply the demodulation results to the selector 134.

The selector 134 selects at least one of the demodulation results supplied from the demodulation sections 133-1 to 133-4. Then, the selector 134 outputs a video signal corresponding to the selected demodulation result to the display 135 and outputs an audio signal corresponding to the selected demodulation result to the speaker 136. In addition, the selector 134 may select at least one of the demodulation results supplied from the demodulation sections 133-1 to 133-4 and output a signal corresponding to the selected demodulation result to a video recorder not shown in Fig. 3.

In response to detection signals supplied from the tuners 132-1 to 132-4, the AGC voltage selection section 137 generates an AGC voltage used to control a gain of a variable gain amplifier in each of the tuners 132-1 to 132-4. In addition, the AGC voltage selection section 137 selects an AGC voltage among generated AGC voltages, the selected AGC voltage corresponding to a detection signal whose level is greater than a predetermined signal level, and supplies the selected AGC voltage to the tuners 132-1 to 132-4.

For example, on the basis of an operation signal input from the operation input section not shown in Fig. 3, the microcomputer 138 controls the tuners 132-1 to 132-4, the AGC voltage selection section 137, and the television receiver 111.

In the above-mentioned configuration, the television receiver 111 can uniformly amplify or attenuate the television signals input to the respective tuners 132-1 to 132-4 with a gain corresponding to the AGC voltage selected by the AGC voltage selection section 137. Therefore, the television signals are not maximally-amplified on the basis of an AGC voltage not adjusted to the signal level of the received television signal but are amplified with an adequate gain.

In addition, when it is not necessary to distinguish among the tuners 132-1 to 132-4 or among the demodulation sections 133-1 to 133-4, such a term as tuner 132 or demodulation section 133 is used.

In addition, in the television receiver 111, the numbers of the tuner 132 and the demodulation section 133 may be not only four as shown in Fig. 3 but any numbers other than four.

### Configuration Example of Tuner

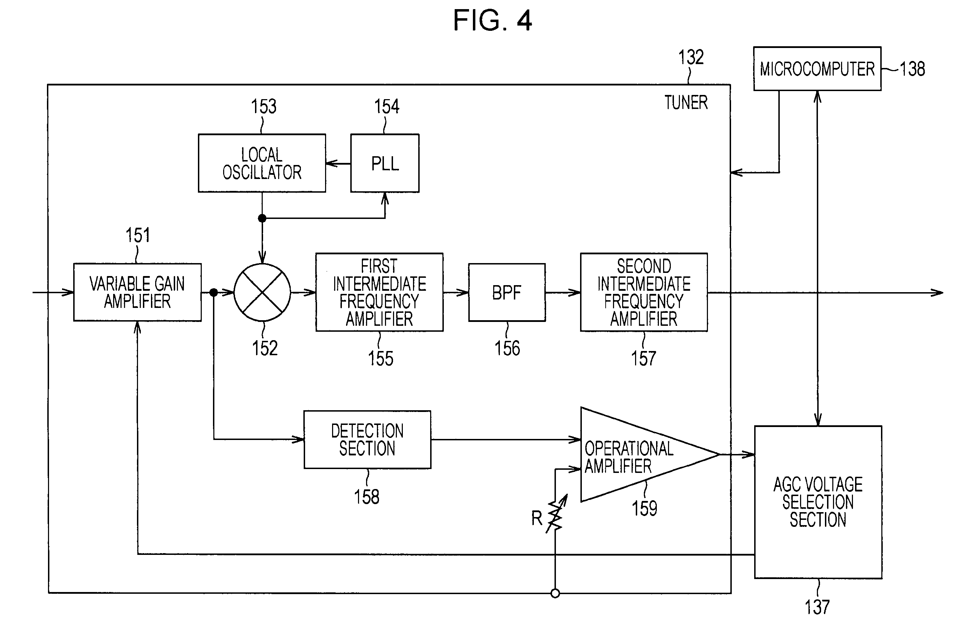

Next, a specific configuration example of the tuner 132 will be described with reference to Fig. 4.

The tuner 132 shown in Fig. 4 includes a variable-gain amplifier 151, a mixer 152, a local oscillator 153, a PLL (Phase Locked Loop) circuit 154, a first intermediate frequency amplifier 155, a BPF (Band Pass Filter) 156, a second intermediate frequency amplifier 157, a detection section 158, and an operational amplifier 159.

The variable-gain amplifier 151 amplifies or attenuates a television signal, distributed from the distributor 131, with a gain corresponding to an AGC voltage supplied from the AGC voltage selection section 137. Then, the variable-gain amplifier 151 supplies the amplified or attenuated television signal to the mixer 152 and the detection section 158.

The mixer 152 generates an intermediate frequency signal (IF signal) which is the received television signal subjected to frequency-conversion by multiplying the television signal supplied from the variable-gain amplifier 151 by a local oscillator signal, supplied from the local oscillator 153, having a predetermined frequency. Then, the mixer 152 supplies the intermediate frequency signal to the first intermediate frequency amplifier 155.

The local oscillator 153 is frequency-controlled by a variable-capacitance control voltage output from the PLL circuit 154 and supplies the local oscillator signal having the predetermined frequency to the mixer 152.

The first intermediate frequency amplifier 155 amplifies the IF signal supplied from the mixer 152 at a predetermined ratio and supplies the amplified IF signal to the BPF 156.

The BPF 156, whose passband corresponds to an intermediate frequency band, allows the IF signal supplied from the first intermediate frequency amplifier 155 to pass therethrough and supplies the IF signal to the second intermediate frequency amplifier 157.

The second intermediate frequency amplifier 157 amplifies the IF signal supplied from the BPF 156 at a predetermined ratio and supplies the amplified IF signal to the demodulation section 133.

The detection section 158 detects the television signal supplied from the variable-gain amplifier 151 and generates a detection signal corresponding to the signal level of the television signal. Then, the detection section 158 supplies the detection signal to the AGC voltage selection section 137 through the operational amplifier 159. Namely, the detection section 158 detects a digital television signal as a desired wave and an analog television signal as an interfering wave, both being supplied from the variable-gain amplifier 151, and generates a detection signal corresponding to the signal levels of these television signals.

The operational amplifier 159 converts the signal level of the AGC voltage supplied from the detection section 158 to a predetermined signal level and supplies the level-converted AGC voltage to the AGC voltage selection section 137.

### Gain Control Processing in Tuner in Television Receiver

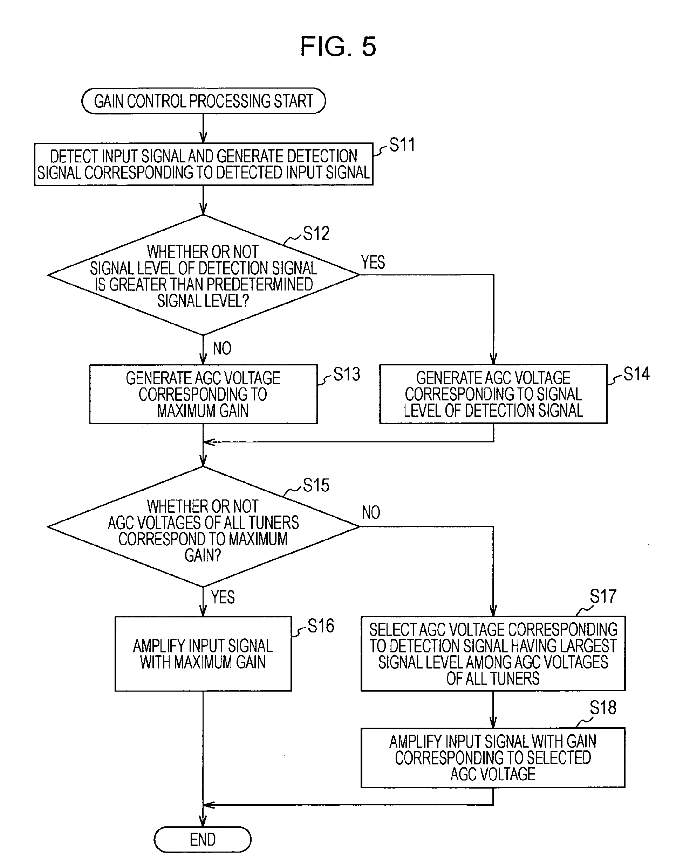

Next, gain control processing in the tuner 132 (132-1 to 132-4) in the television receiver 111 will be described with reference to a flowchart shown in Fig. 5. In addition, the flowchart shown in Fig. 5 will be described by focusing attention on one of the tuners 132-1 to 132-4 (conveniently called attention-focused tuner 132 hereinafter). In addition, processing in Steps S11 to S14, S16, and S18 are concurrently performed in other tuners 132 in addition to the attention-focused tuner 132.

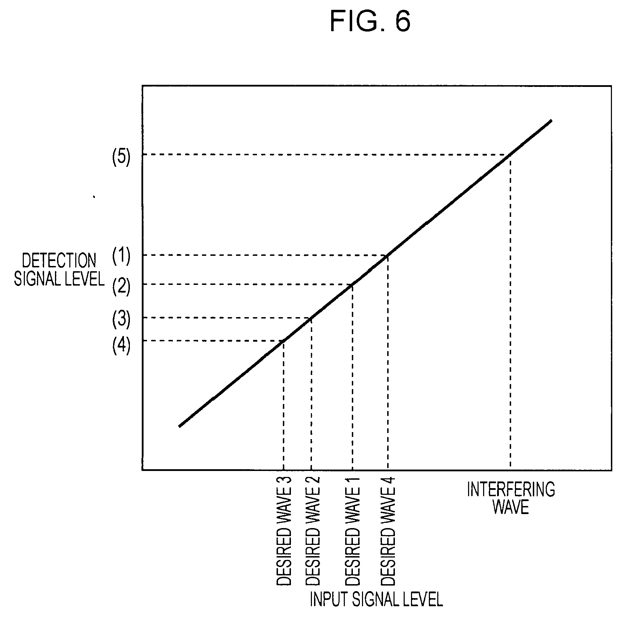

In Step S11, the detection section 158 in the attention-focused tuner 132 detects a television signal (an input signal) output from the variable gain amplifier 151 and generates a detection signal corresponding to the signal level of the detected television signal. Then, the detection section 158 supplies the detection signal to the AGC voltage selection section 137 through the operational amplifier 159. More specifically, on the basis of a characteristic shown in Fig. 6, the detection section 158 generates a detection signal corresponding to the signal level of the input signal. Then, the detection section 158 supplies the detection signal to the AGC voltage selection section 137 through the operational amplifier 159.

Fig. 6 shows a characteristic between the input signal level and the detection signal level in the detection section 158.

As shown in Fig. 6, there is a proportional relationship between the input signal level and the detection signal level. Therefore, the signal level of the detection signal increases as the signal level of the input signal increases. Then, desired waves 1 to 4 and an interfering wave shown in Fig. 6 will be described hereinafter.

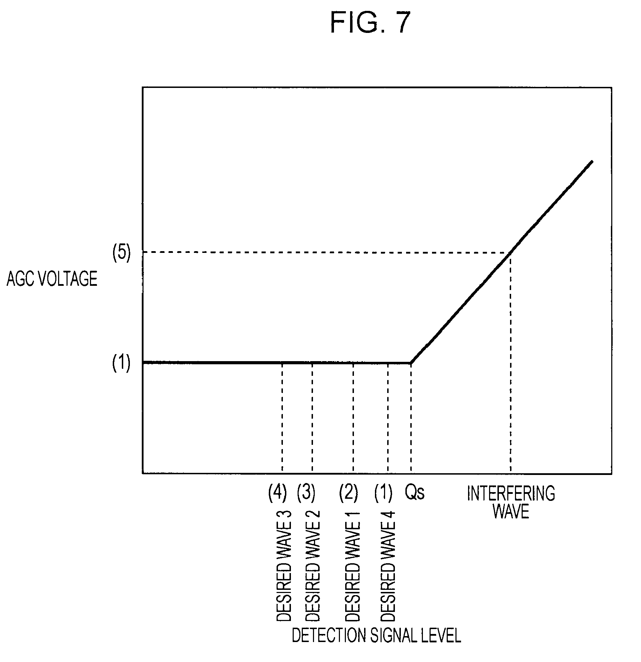

In Step S12, the AGC voltage selection section 137 determines whether or not the signal level of the detection signal supplied from the detection section 158 in the attention-focused tuner 132 is larger than a predetermined signal level. More specifically, on the basis of a characteristic shown in Fig. 7, the AGC voltage selection section 137 determines whether or not the signal level of the detection signal supplied from the detection section 158 in the attention-focused tuner 132 is larger than a predetermined signal level Qs.

Fig. 7 shows a characteristic between the detection signal level and the AGC voltage in the AGC voltage selection section 137.

As shown in Fig. 7, the signal level of the AGC voltage remains constant (corresponding to a signal level numbered one in Fig. 7) till the signal level of the detection signal reaches the signal level Qs. In addition, when the signal level of the detection signal is larger than the signal level Qs, the signal level of the AGC voltage increases as the signal level of the detection signal increases. Then, desired waves 1 to 4 and an interfering wave shown in Fig. 7 will be described hereinafter.

In Step S12, when it is determined that the signal level of the detection signal is not larger than the signal level Qs, the processing proceeds to Step S13.

In Step S13, the AGC voltage selection section 137 generates an AGC voltage causing a maximum gain of the variable gain amplifier 151. Then, the processing proceeds to Step S15.

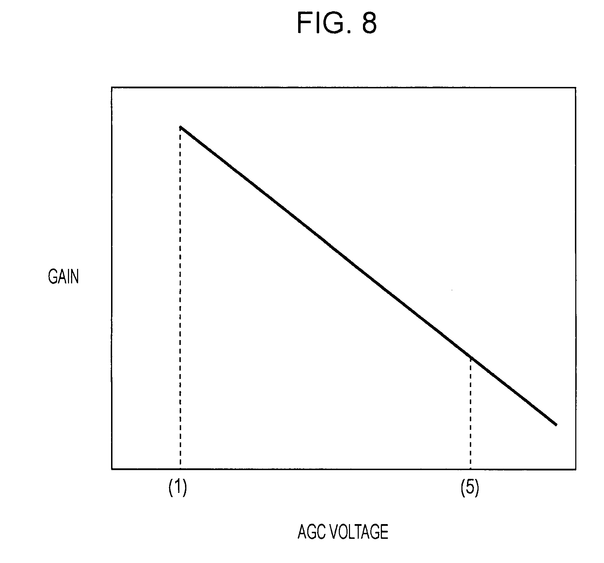

A characteristic between the AGC voltage and the gain in the variable gain amplifier 151 will be described with reference to Fig. 8, hereinafter. Then, in Fig. 8, the signal levels of the AGC voltage, numbered one and five, correspond to the signal levels of the AGC voltage, numbered one and five, in Fig. 7, respectively.

As shown in Fig. 8, while the AGC voltage numbered one corresponds to the maximum gain, the gain of the variable gain amplifier 151 decreases as the signal level of the AGC voltage increases.

Therefore, when the signal level of the detection signal is not greater than the signal level Qs, the signal level of the AGC voltage becomes the signal level of the AGC voltage numbered one (in Fig. 7) and the corresponding gain of the variable gain amplifier 151 becomes the maximum gain (in Fig. 8). In addition, when the signal level of the detection signal is greater than the signal level Qs (in Fig. 7), the signal level of the AGC voltage becomes large in proportion to the signal level of the detection signal and the corresponding gain of the variable gain amplifier 151 decreases in proportion to the signal level of the AGC voltage (in Fig. 8).

Namely, in Step S13, the AGC voltage selection section 137 generates the AGC voltage corresponding to the maximum gain in Fig. 8 (the signal level of the AGC voltage, numbered one in Fig. 8) and the processing proceeds to Step S15.

On the other hand, in Step S12, when it is determined that the signal level of the detection signal is larger than the signal level Qs, in the characteristic shown in Fig. 7, the processing proceeds to Step S14.

In Step S14, on the basis of the characteristic shown in Fig. 7, the AGC voltage selection section 137 generates an AGC voltage corresponding to the signal level of the detection, and the processing proceeds to Step S15.

In Step S15, the AGC voltage selection section 137 determines whether or not all AGC voltages of the attention-focused tuner 132 and other tuners other than the attention-focused tuner 132 have signal levels corresponding to the maximum gain. In other words, the AGC voltage selection section 137 determines whether or not signal levels of all tuners 132 are equal to or smaller than the signal level Qs, and furthermore, whether or not the signal level of the input signal is equal to or smaller than a predetermined signal level.

In Step S15, when it is determined that all AGC voltages of all tuners 132 have signal levels corresponding to the maximum gain, the AGC voltage selection section 137 generates the AGC voltage corresponding to the maximum gain of the variable gain amplifier 151 and supplies the generated AGC voltage to the variable gain amplifier 151 in each of all tuners 132. Then, the processing proceeds to Step S16.

In Step S16, the variable gain amplifier 151 in the attention-focused tuner 132 amplifies the input television signal with a gain corresponding to the AGC voltage, supplied from the AGC voltage selection section 137, that is, the maximum gain, and supplies the amplified television signal to the mixer 152.

On the other hand, in Step S15, when it is not determined that all AGC voltages of all tuners 132 have signal levels corresponding to the maximum gain, namely, when at least one of signal levels of all tuners 132 is greater than the signal level Qs, the processing proceeds to Step S17.

In Step S17, the AGC voltage selection section 137 selects an AGC voltage corresponding to a detection signal having the largest signal level among all AGC voltages of all tuners 132 and supplies the selected AGC voltage to the variable gain amplifier 151 in each of all tuners 132. More specifically, in Fig. 7, the AGC voltage selection section 137 selects an AGC voltage corresponding to a detection signal having the largest signal level among AGC voltages corresponding to detection signals having signal levels larger than the signal level Qs. Then, the AGC voltage selection section 137 supplies the selected AGC voltage to the variable gain amplifier 151 in each of all tuners 132.

In Step S18, the variable gain amplifier 151 in the attention-focused tuner 132 amplifies or attenuates the input television signal with a gain corresponding to the AGC voltage, supplied from the AGC voltage selection section 137, that is, in Fig. 8, a gain smaller than the maximum gain, and supplies the amplified or attenuated television signal to the mixer 152.

According to the above-mentioned processing, when a television signal (input signal) having a high signal level is input, an AGC voltage corresponding to the input signal is selected. Then, gains of variable gain amplifiers in a plurality of tuners are uniformly controlled on the basis of the selected AGC voltage. Therefore, distortion of an intermediate frequency signal can be reduced without amplifying, more than necessary, the input signal having a high signal level. In addition, since an unnecessary distortion component within an intermediate frequency band is not caused, the television receiver can receive a television signal without falling into an unreceivable state.

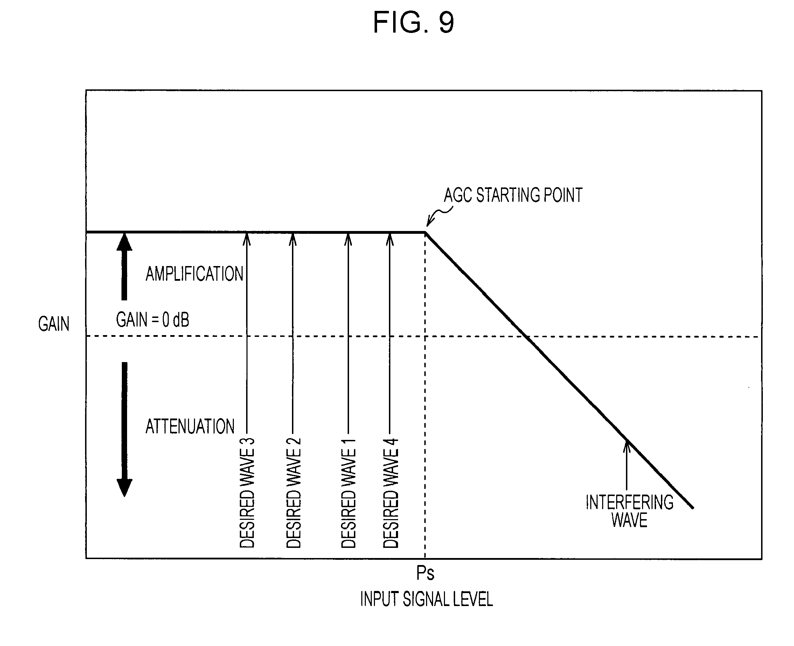

In the above-mentioned processing, there is a relationship, as shown in Fig. 9, between a signal level of an input signal input to the detection section 158 and a gain of the variable gain amplifier 151.

Namely, the gain of the variable gain amplifier 151 remains constant (a maximum gain) till the signal level of the input signal exceeds the signal level Ps (AGC starting point). In addition, when the signal level of the input signal exceeds the signal level Ps, the gain of the variable gain amplifier 151 decreases as the signal level of the input signal increases. Then, in Fig. 9, a dashed line crossing in the middle of a vertical axis representing a gain indicates the gain 0 dB. When a gain is larger than the gain 0 dB, the television signal is amplified by the variable gain amplifier 151. Then, when a gain is smaller than the gain 0 dB, the television signal is attenuated by the variable gain amplifier 151. Then, desired waves 1 to 4 and an interfering wave shown in Fig. 9 will be described hereinafter.

In addition, in Fig. 9, when the signal level of the input signal exceeds the signal level Ps, the gain of the variable gain amplifier 151 decreases in reverse proportion to the signal level of the input signal. However, it may be acceptable that the gain of the variable gain amplifier 151 drops to a predetermined gain when the signal level of the input signal exceeds the AGC starting point.

### Functioning of Tuner when an Input Signal includes only Desired Wave or when there is no large Difference between a Desired Wave Level and an Interfering wave Level

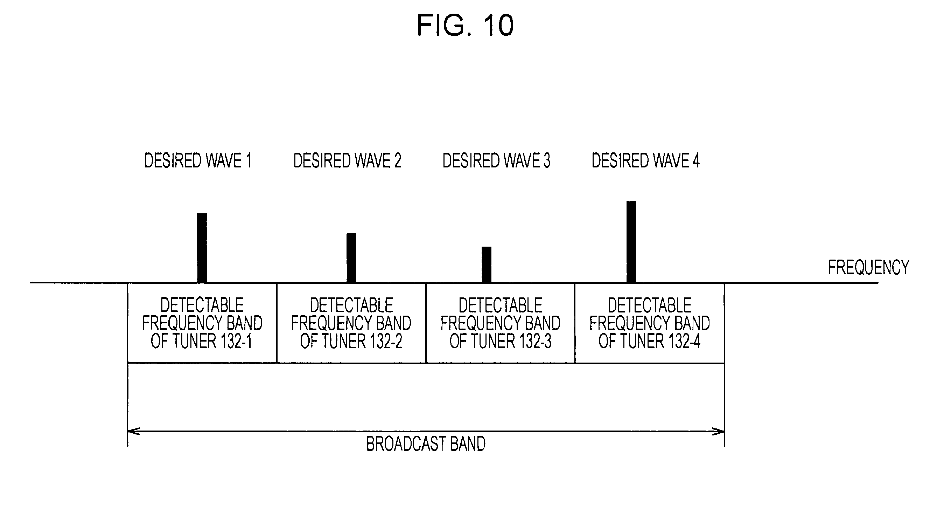

Detectable frequency bands of the detection sections 158 in the tuners 132-1 to 132-4 will be described with reference to Fig. 10 hereinafter.

In Fig. 10, a horizontal axis represents a frequency and the frequency increase left to right along the horizontal axis. As shown in Fig. 10, detectable frequency bands of the tuners 132-1 to 132-4 are left to right sequentially allocated to a broadcast band of a television signal. Namely, in the broadcast band of the television signal, the detectable frequency band of the tuner 132-1 is the lowest frequency band and the detectable frequency band of the tuner 132-4 is the highest frequency band. In addition, digital television signals (desired waves) which the tuners 132-1 to 132-4 are to receive are included, as desired waves 1 to 4, in detectable frequency bands of the tuners 132-1 to 132-4, respectively. In Fig. 10, perpendicular heights of the desired waves 1 to 4 indicated on the horizontal axis (a frequency axis) represent signal levels of the desired waves 1 to 4, respectively. Namely, in the desired waves 1 to 4, the signal level of the desired wave 4 is largest, the signal level of the desired wave 1 is second largest, the signal level of the desired wave 2 is third largest, and the signal level of the desired wave 3 is smallest.

Each of functions of the tuners 132-1 to 132-4 when the television receiver 111 receives the above-mentioned television signal including the desired waves 1 to 4 will be described.

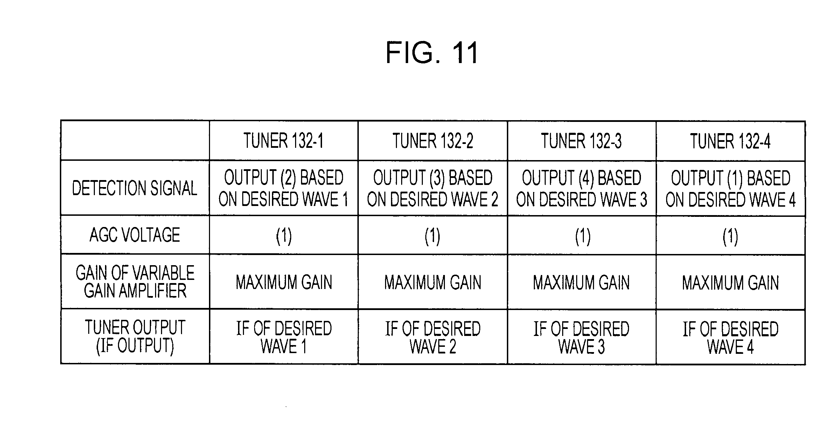

Namely, when the television receiver 111 receives the television signal including the desired waves 1 to 4, the detection sections 158 in the tuners 132-1 to 132-4 detect the desired waves 1 to 4, respectively. The relationship among the signal levels of the desired waves 1 to 4 is as follows: the signal level of the desired wave 4 > the signal level of the desired wave 1 > the signal level of the desired wave 2 > the signal level of the desired wave 3. Therefore, as shown in Fig. 11, the signal levels of the detection signals output from the detection sections 158 in the tuners 132-1 to 132-4 correspond to the signal levels numbered two, three, four, and one in Fig. 6, respectively (in Step S11).

In Fig. 11, an output state of each of sections in the tuners 132-1 to 132-4 is described.

In Fig. 11, the first row from the top indicates classification according to the tuners 132-1 to 132-4. The second row indicates the detection signal level of the detection section 158 in each of the tuners 132-1 to 132-4, and the third row indicates the signal level of the AGC voltage generated by the AGC voltage selection section 137 according to the detection signal level of each of the tuners 132-1 to 132-4. The fourth row indicates the gain determined by the variable gain amplifier 151 in response to the AGC voltage in each of the tuners 132-1 to 132-4, and the fifth row indicates the IF signal finally output from each of the tuners 132-1 to 132-4.

Next, the detection signals output in response to the desired waves 1 to 4 are supplied from the detection sections 158 in the tuners 132-1 to 132-4 to the AGC voltage selection section 137 through the operational amplifiers 159. At this time, as shown in Fig. 11, the signal level of the AGC voltage generated by the AGC voltage selection section 137 corresponds to the signal level numbered one in Fig. 7 (in Steps S12 and S13).

When the AGC voltage whose level corresponds to the input signal level is generated, the variable gain amplifiers 151 in the tuners 132-1 to 132-4, as shown in Fig. 11, amplify the input signal (television signal) with the maximum gain based on the characteristic shown in Fig. 8, respectively (Step S16). The variable gain amplifiers 151 in the tuners 132-1 to 132-4 supply the amplified television signals to the mixers 152, respectively. At this time, in the mixers 152 in the tuners 132-1 to 132-4, since the desired waves (digital television signals) having adequate signal levels are supplied from the variable gain amplifiers 151, unnecessary distortion component does not arise in the intermediate frequency band. Therefore, without falling into an unreceivable state, the tuners 132-1 to 132-4 can supply the IF signals finally based on the desired waves 1 to 4 as shown in Fig. 11 to the demodulation sections 133-1 and 133-4, respectively.

### Functioning of Tuner when an Input Signal includes an Interfering Wave larger in level than Desired Wave

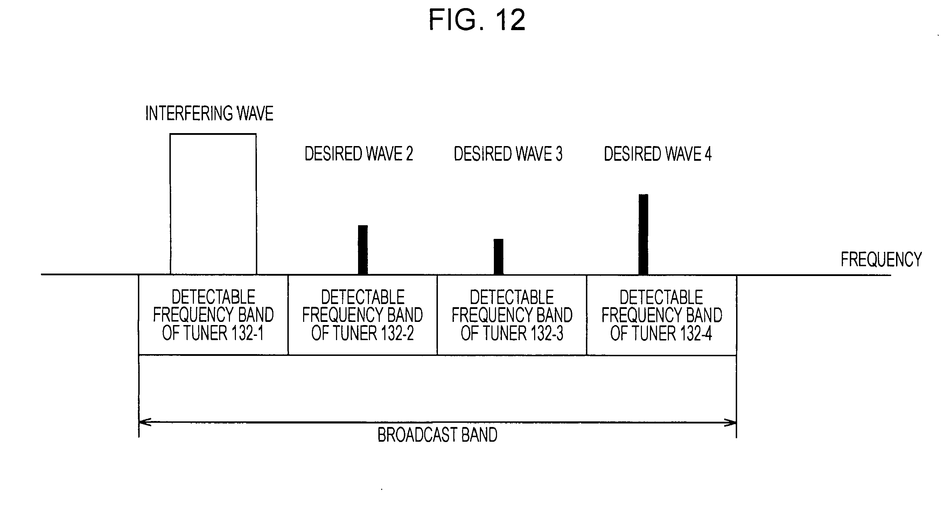

Next, a case in which an interfering wave is included in detectable frequency bands of the tuners 132-1 to 132-4 will be described with reference to Fig. 12.

In a broadcast band of a television signal as shown in Fig. 12, unlike the case as shown in Fig. 10, an analog television signal (interfering wave) in addition to channels which the tuners 132-1 to 132-4 is to receive is included the detectable frequency band of the tuners 132-1. A signal level of the interfering wave is larger than signal levels of the desired waves 2 to 4.

Each of functions of the tuners 132-1 to 132-4 when the television receiver 111 receives the above-mentioned television signal including the interfering wave and the desired waves 2 to 4 will be described.

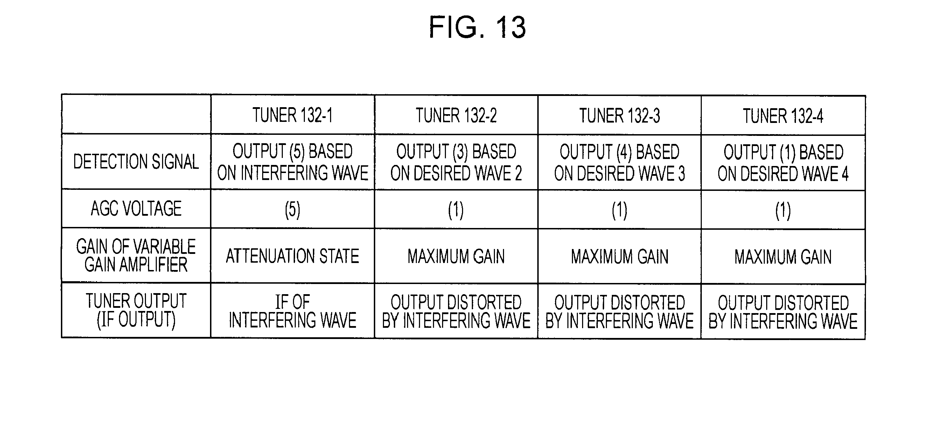

Namely, when the television receiver 111 receives the television signal including the interfering wave and the desired waves 2 to 4, the detection sections 158 in the tuners 132-1 to 132-4 detect the interfering wave and the desired waves 2 to 4, respectively. The relationship among the signal levels of the interfering wave and the desired waves 2 to 4 is as follows: the signal level of the interfering wave > the signal level of the desired wave 4 > the signal level of the desired wave 2 > the signal level of the desired wave 3. Therefore, as shown in Fig. 13, the signal levels of the detection signals output from the detection sections 158 in the tuners 132-1 to 132-4 correspond to the signal levels numbered five, three, four, and one in Fig. 6, respectively (in Step S11).

In Fig. 13, an output state of each of sections in the tuners 132-1 to 132-4 is described. Then, since the configuration of Fig. 13 corresponds to that of Fig. 11, the description thereof is omitted.

Next, the detection signals output in response to the interfering wave and the desired waves 2 to 4 are supplied from the detection sections 158 in the tuners 132-1 to 132-4 to the AGC voltage selection section 137 through the operational amplifiers 159. At this time, as shown in Fig. 13, the signal level of the AGC voltage generated by the AGC voltage selection section 137 in response to the signal levels of the detection signals supplied from the tuners 132-2 to 132-4 corresponds to the signal level numbered one in Fig. 7 (in Steps S12 and S13). In addition, as shown in Fig. 13, the signal level of the AGC voltage generated by the AGC voltage selection section 137 in response to the signal level of the detection signal supplied from the tuner 132-1 corresponds to the signal level numbered five in Fig. 7 (in Steps S12 and S14).

At this time, if the tuners 132-1 to 132-4 are tuners of a non-tuning type of the related art, an AGC voltage is generated in response to the signal level of the detection signal supplied from each of the tuners 132-1 to 132-4 or, in a broad sense, the television signal received by each of the tuners 132-1 to 132-4. The generated AGC voltage is supplied to the variable gain amplifier 151. Namely, as shown in Fig. 13, since the AGC voltage corresponding to the interfering wave is supplied to the variable gain amplifier 151 in the tuner 132-1, the variable gain amplifier 151 in the tuner 132-1 attenuates the input signal. In addition, since the AGC voltages corresponding to the desired waves 2 to 4 are supplied to the variable gain amplifiers 151 in the tuners 132-2 to 132-4, the variable gain amplifiers 151 in the tuners 132-2 to 132-4 amplifies the input signals with the maximum gain.

At this time, since the variable gain amplifiers 151 in the tuners 132-2 to 132-4 are equipped with no tuning circuit, the input interfering wave which is not excluded is also input and amplified with the maximum gain. As a result, the interfering waves amplified with the maximum gain are input to the mixers 152 in the tuners 132-2 to 132-4. Therefore, since unnecessary distortion components are caused within intermediate frequency bands, the tuners 132-2 to 132-4 fall into an unreceivable state. In addition, the attenuated interfering wave is input to the mixer 152 in the tuner 132-1. As shown in Fig. 13, the tuner 132-1 supplies the IF signal corresponding to the interfering wave to the demodulation section 133-1 and the tuners 132-2 to 132-4 supply the IF signals distorted by the interfering wave to the demodulation sections 133-2 to 133-4, respectively.

In the television receiver 111 according to an embodiment of the invention, the AGC voltage selection section 137 does not supply AGC voltages, corresponding to the signal levels of the detection signals supplied from the tuners 132-1 to 132-4, to the tuners 132-1 to 132-4 respectively. Namely, the AGC voltage selection section 137 selects an AGC voltage corresponding to a detection signal having the largest signal level among AGC voltages corresponding to the signal levels of the detection signals supplied from the tuners 132-1 to 132-4 and supplies the selected AGC voltage to the tuners 132-1 to 132-4 (in Step S17).

Namely, in the example shown in Fig. 12, the AGC voltage selection section 137 selects an AGC voltage corresponding to the detection signal level based on the interfering wave and supplies the selected AGC voltage to the tuners 132-1 to 132-4. Therefore, since the variable gain amplifiers 151 in the tuners 132-2 to 132-4 also attenuate the interfering wave, the tuners 132-2 to 132-4 can receive television signals while no unnecessary distortion component caused within an intermediate frequency band makes the tuners 132-2 to 132-4 fall into an unreceivable state.

As described above, when the interfering wave having a high signal level is input, the AGC voltage corresponding to the interfering wave is selected and gains of the variable gain amplifiers in a plurality of tuners are uniformly controlled on the basis of the selected AGC voltage. Therefore, distortion of an intermediate frequency signal can be reduced without amplifying, more than necessary, the interfering signal having a high signal level. In addition, since an unnecessary distortion component is not caused within an intermediate frequency band, the plurality of tuners can receive television signals without falling into an unreceivable state.

While, in the above-mentioned configuration, gains of the variable gain amplifiers in the plurality of tuners are uniformly controlled, it is acceptable that gain of the variable gain amplifier in each of the plurality of tuners is independently controlled when a signal level of an input signal (detection signal) is smaller than a predetermined level.

### 2. Second Embodiment

### Configuration Example of Tuner

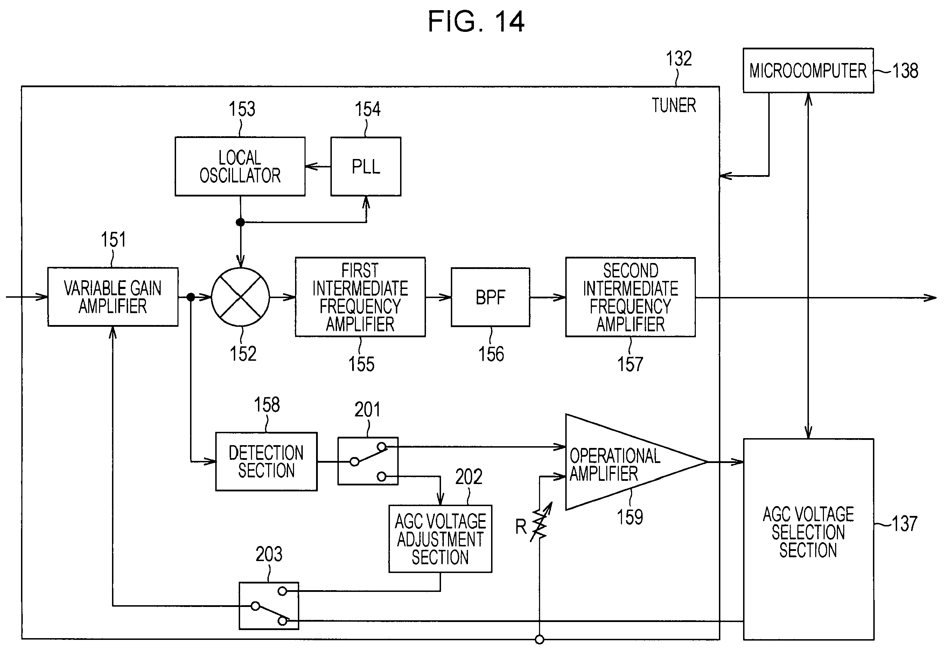

Fig. 14 shows a configuration example of a tuner. Gains of variable gain amplifiers in the tuners are controlled on the basis of an AGC voltage corresponding to an input signal level (detection signal level) having the largest signal level only when the television receiver 111 is initially set or on start-up. After initial setting or start-up, gain of the variable gain amplifier in each of the tuners is independently controlled when a signal level of the input signal (detection signal) is smaller than a predetermined level.

In addition, in the tuner 132 shown in Fig. 14, components having the same functions as those in Fig. 4 are assigned same names and same numbers and descriptions thereof are omitted arbitrarily.

Namely, in the tuner 132 shown in Fig. 14, differences between the tuner 132 shown in Fig. 14 and the tuner 132 shown in Fig. 4 are a changing-over switch 201, an AGC voltage adjustment section 202, and a changing-over switch 203.

In addition to the same function as the detection section 158 shown in Fig. 4, the detection section 158 shown in Fig. 14 determines whether or not a signal level of a television signal (input signal) supplied from the variable gain amplifier 151 is greater than a predetermined signal level.

On the basis of control by the microcomputer 138, the changing-over switch 201 switches between the operational amplifier 159 and the AGC voltage adjustment section 202 as a supply destination of a detection signal supplied from the detection section 158.

The AGC voltage adjustment section 202 generates an AGC signal corresponding to the signal level of the detection signal supplied from the detection section 158 and adjusts the signal level of the AGC voltage. Then, the AGC voltage adjustment section 202 supplies the adjusted AGC voltage to the variable gain amplifier 151 through the changing-over switch 203.

Coordinated with the changing-over switch 201, the changing-over switch 203 switches between the AGC voltage selection section 137 and the AGC voltage adjustment section 202 as a supply source of the AGC voltage supplied to the variable gain amplifier 151.

In addition, in an initial state (initially set or on start-up), the changing-over switch 201 connects the detection section 158 to the operational amplifier 159 and the changing-over switch 203 connects the AGC voltage selection section 137 to the variable gain amplifier 151.

### Gain Control Processing in Tuner in Television Receiver

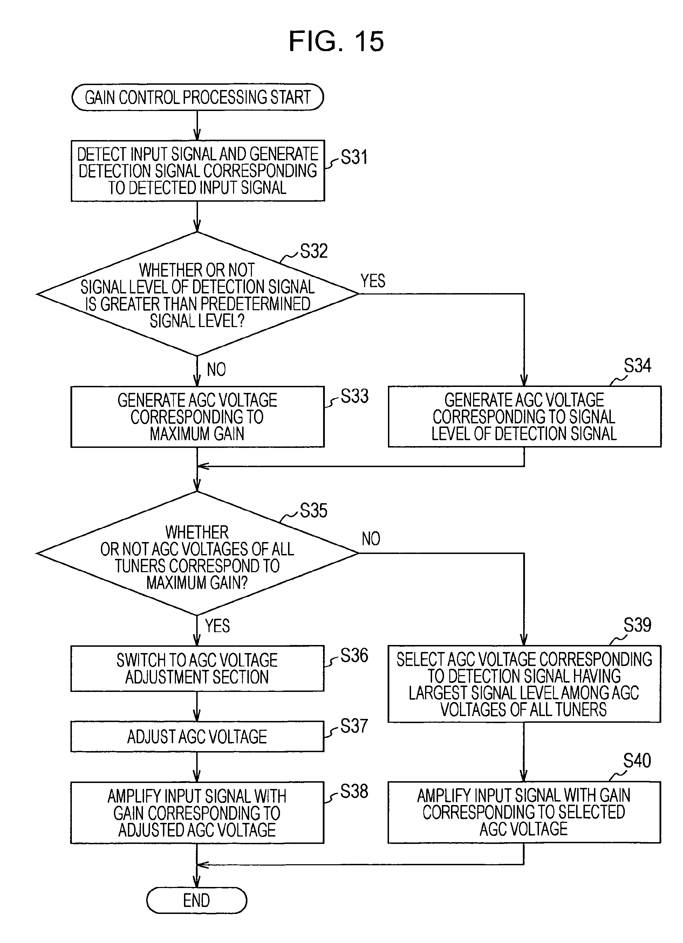

Next, gain control processing in the tuner 132 (132-1 to 132-4) shown in Fig. 14 in the television receiver 111 will be described with reference to a flowchart shown in Fig. 15. Then, in the flowchart shown in Fig. 15, since processing in Steps S31 to S35, S39, and S40 are the same as that in Steps S11 to S18 in the gain control processing described with reference to the flowchart shown in Fig. 5, descriptions thereof are omitted. In addition, the gain control processing shown in Fig. 15 is performed when the television receiver 111 is initially set or on start-up.

Namely, in Step S35, when it is not determined that all AGC voltages of all tuners 132 have signal levels corresponding to the maximum gain, namely, when at least one of signal levels of all tuners 132 is greater than the signal level Qs, the processing proceeds to Step S39.

In Step S36, on the basis of control by the microcomputer 138, the changing-over switch 201 switches a supply destination of a detection signal supplied from the detection section 158 to the AGC voltage adjustment section 202 and the changing-over switch 203 switches a supply source of the AGC voltage supplied to the variable gain amplifier 151 to the AGC voltage adjustment section 202.

In Step S37, the AGC voltage adjustment section 202 generates an AGC voltage corresponding to the signal level of the detection signal supplied from the detection section 158 through the changing-over switch 201, adjusts the signal level of the AGC voltage, and supplies the adjusted AGC voltage to the variable gain amplifier 151 through the changing-over switch 203.

In Step S38, the variable gain amplifier 151 amplifies the input television signal (input signal) with a gain based on the AGC voltage supplied from the AGC voltage adjustment section 202 and supplies the amplified television signal to the mixer 152.

According to the above-mentioned processing, when the signal level of the television signal is not greater than a predetermined signal level, the tuner 132-1 to 132-4 generate and adjust AGC voltages and control gains of the variable gain amplifiers 151, respectively. Therefore, when the television signal does not include an interfering wave having a high signal level, an optimum gain control can be performed in each of the tuner 132-1 to 132-4 and degradation of the receiver sensitivity can be prevented. In addition, when the interfering wave having a high signal level is input, the AGC voltage corresponding to the interfering wave is selected and gains of the variable gain amplifiers in the plurality of tuners are uniformly controlled on the basis of the selected AGC voltage. Therefore, distortion of an intermediate frequency signal can be reduced without amplifying, more than necessary, the interfering signal having a high signal level.

While, in the above-mentioned configuration, switching between gain control based on an AGC voltage supplied from outside a tuner and gain control based on an AGC voltage generated and adjusted in the tuner is performed, it is acceptable to switch a gain control method as necessary on the basis of an operation signal input from an operation input section not shown in Fig. 14.

Therefore, an optimum gain control can be appropriately performed in each of tuners and degradation of the receiver sensitivity can be prevented.

The above-mentioned series of processing can be performed with hardware or software. When the series of processing is performed with software, a program including the software is installed from a program record medium into a computer embedded in dedicated hardware or a general-purpose personal computer, for example, in which various functions can be executed by installing various programs.

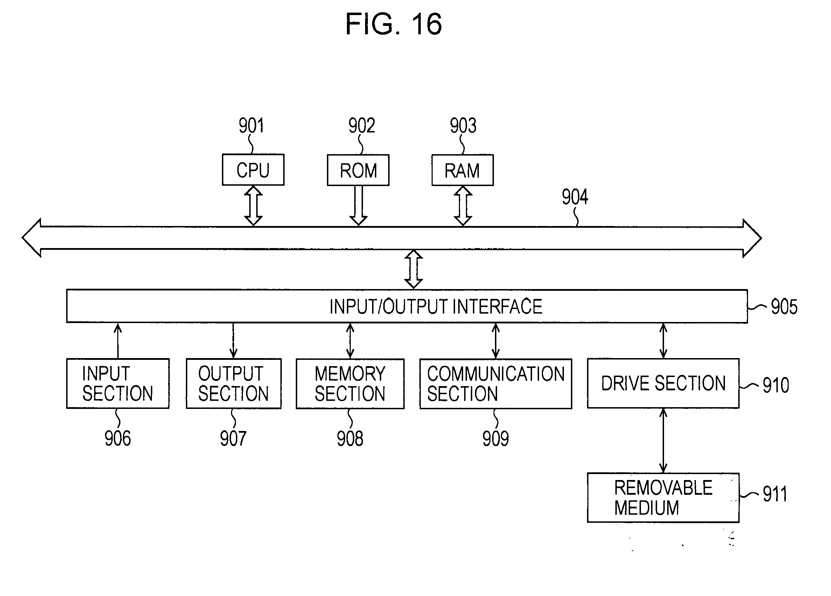

Fig. 16 is a block diagram showing a hardware configuration example of a computer performing the above-mentioned series of processing.

In the computer, a CPU (Central Processing Unit) 901 corresponding to the microcomputer 138, a ROM (Read Only Memory) 902, and a RAM (Random Access Memory) 903 are connected to one another through a Bus 904.

An input-output interface 905 is additionally connected to the Bus 904. An input section 906 including a keyboard, a mouse, and a microphone, an output section 907 including a speaker and a display, a memory section 908 including a hard disk and a nonvolatile memory, a communication section 909 including a network interface, and a drive section 910 used to drive a removable medium 911 such as a magnetic disk, an optical disk, a magnet-optical disk, or a semiconductor memory are connected to the input-output interface 905.

In the computer with the above-mentioned configuration, for example, when the CPU 901 loads the program stored in the memory section 908 into the RAM 903 through the input-output interface 905 and the Bus 904 and executes the program, the above-mentioned series of processing is performed.

For example, the program executed by the computer (CPU 901) is stored in the removable medium 911, which is a package medium such as a magnetic disk (for example, a flexible disk), an optical disk (a CD-ROM (Compact Disc-Read Only Memory) or DVD (Digital Versatile Disc)), a magnet-optical disk, or a semiconductor memory and so forth, and provided. Alternatively, for example, the program may be provided through a wire or wireless transmission medium such as a local area network, Internet, or Digital Satellite Broadcasting.

Then, the program may be installed into the memory section 908 through the input-output interface 905 by loading the removable medium 911 into the drive section 910. In addition, the program may be received by the communication section 909 through the wire or wireless transmission medium and installed into the memory section 908. Also, the program may be installed into the ROM 902 or the memory section 908 in advance.

Then, the program executed by the computer may be a program processed in temporal sequence along the order described in the specification, a program processed in parallel, or a program processed at necessary timing when a program call is executed.

The present application contains subject matter related to that disclosed in Japanese Priority Patent Application JP 2008-310529 filed in the Japan Patent Office on December 5, 2008, the entire content of which is hereby incorporated by reference.

It should be understood by those skilled in the art that various modifications, combinations, sub-combinations and alterations may occur depending on design requirements and other factors insofar as they are within the scope of the appended claims or the equivalents thereof.

## Claims

1. A receiving apparatus comprising:
a plurality of receiving means, each including a variable gain section configured to amplify or attenuate an input signal input thereto with a gain corresponding to an AGC (Automatic Gain Control) signal; and
generating means for generating an AGC signal in each case when an input signal input to the respective receiving means is greater than a first predetermined signal level, the AGC signal reducing the gain of the variable gain section in response to a signal level of the input signal;
wherein the variable gain section in each of the plurality of receiving means amplifies or attenuates the input signal with a gain corresponding to the AGC signal generated by the generating means, when the input signal input to the receiving means is greater than the first predetermined signal level.

2. The receiving apparatus according to claim 1, wherein
each of the plurality of receiving means further includes a detection section for detecting the input signal and generating a detection signal corresponding to the signal level of the input signal;
the generating means generates the AGC signal when the detection signal generated in any of the plurality of receiving means is greater than a second predetermined signal level, the AGC signal reducing the gain of the variable gain section in response to a signal level of the detection signal; and
the variable gain section in each of the plurality of receiving means amplifies or attenuates the input signal with a gain corresponding to the AGC signal generated by the generating means, when the detection signal generated in the receiving means is greater than the second predetermined signal level.

3. The receiving apparatus according to claim 2, wherein
the generating means generates the AGC signal when the detection signal generated in any of the plurality of receiving means is greater than the second predetermined signal level, the AGC signal reducing the gain of the variable gain section in response to the signal level of the detection signal, and the generating means selects the AGC signal corresponding to the detection signal having the largest signal level among the AGC signals; and
the variable gain section in each of the plurality of receiving means amplifies or attenuates the input signal with a gain corresponding to the AGC signal selected by the generating means.

4. The receiving apparatus according to claim 2, wherein
the detection section in each of the plurality of receiving means detects an input signal in a different frequency band.

5. The receiving apparatus according to claim 1, wherein
a desired signal as an input signal to be received and an interfering signal as an input signal not to be received are input to each of the plurality of receiving means;
the generating means generates the AGC signal when a signal level of the interfering signal is greater than a signal level of the desired signal, the AGC signal reducing the gain of the variable gain section in response to the signal level of the interfering signal; and
the variable gain section in each of the plurality of receiving means amplifies or attenuates the desired signal and the interfering signal with a gain corresponding to the AGC signal generated by the generating means, when the signal level of the interfering signal is greater than the signal level of the desired signal.

6. The receiving apparatus according to claim 1, wherein
each of the plurality of receiving means further includes an adjustment section configured to generate and adjust the AGC signal corresponding to the input signal in each case when an input signal input to the respective receiving means is smaller than the first predetermined signal level; and
the variable gain section in each of the plurality of receiving means amplifies or attenuates the input signal with a gain corresponding to the AGC signal adjusted by the adjustment section.

7. The receiving apparatus according to claim 6, wherein
each of the plurality of receiving means further includes a switch section configured to switch between acquisition of the AGC signal by the generating means and acquisition of the AGC signal by the adjustment section, the AGC signal being used in the variable gain section.

8. A reception method performed in a receiving apparatus, the receiving apparatus including:
a plurality of receiving means, each including a variable gain section configured to amplify or attenuate an input signal input thereto with a gain corresponding to an AGC (Automatic Gain Control) signal; and
generating means configured to generate an AGC signal in each case when an input signal input to the respective receiving means is greater than a predetermined signal level, the AGC signal reducing the gain of the variable gain section in response to a signal level of the input signal,
the reception method comprising the steps of:
generating the AGC signal by the generating means when the input signal input to any of the plurality of receiving means is greater than the predetermined signal level, the AGC signal reducing the gain of the variable gain section in response to the signal level of the input signal; and
amplifying or attenuating the input signal, by the variable gain section in each of the plurality of receiving means, with a gain corresponding to the AGC signal generated in the generating step, when the input signal input to the receiving means is greater than the predetermined signal level.

9. A recording medium storing a computer readable program configured to cause a receiving apparatus to execute processing, the receiving apparatus including:
a plurality of receiving means, each including a variable gain section configured to amplify or attenuate an input signal input thereto with a gain corresponding to an AGC (Automatic Gain Control) signal; and
generating means configured to generate an AGC signal in each case when an input signal input to the respective receiving means is greater than a predetermined signal level, the AGC signal reducing the gain of the variable gain section in response to a signal level of the input signal,
the computer readable program comprising the steps of:
generating the AGC signal by the generating means when the input signal input to any of the plurality of receiving means is greater than the predetermined signal level, the AGC signal reducing the gain of the variable gain section in response to the signal level of the input signal; and
amplifying or attenuating the input signal, by the variable gain section in each of the plurality of receiving means, with a gain corresponding to the AGC signal generated in the generating step, when the input signal input to the receiving means is greater than the predetermined signal level.

10. A receiving apparatus comprising:
a plurality of receivers, each including a variable gain section configured to amplify or attenuate an input signal input thereto with a gain corresponding to an AGC (Automatic Gain Control) signal; and
a generator configured to generate an AGC signal in each case when an input signal input to the respective receivers is greater than a predetermined signal level, the AGC signal reducing the gain of the variable gain section in response to a signal level of the input signal;
wherein the variable gain section in each of the plurality of receivers amplifies or attenuates the input signal with a gain corresponding to the AGC signal generated by the generator, when the input signal input to the receiver is greater than the predetermined signal level.
